# EUROPÄISCHE PATENTSCHRIFT

(11) **EP 1 505 001 B1**
(45) Veröffentlichungstag und Bekanntmachung des Hinweises auf die Patenterteilung: **14.11.2007**
(21) Anmeldenummer: 04018451.7
(22) Anmeldetag: 04.08.2004
(51) Int. Cl.: B65D 1/22, B29C 53/06, B31B 1/25, B31B 3/26, B31B 3/64, B65D 21/032

(54) **Verfahren zur Herstellung eines kastenförmigen Ladungsträgers aus thermoplastischem Kunststoff**
Process for manufacturing a box-shaped container made of thermoplastic material
Procédé pour fabriquer un récipient en forme de boîte en matière thermoplastique

(30) Priorität: 04.08.2003 DE 10335629
(43) Veröffentlichungstag der Anmeldung: 09.02.2005
(73) Patentinhaber: Dimer, Christoph, D-14513 Teltow (DE)
(72) Erfinder: Dimer, Christoph, D-14513 Teltow (DE)
(74) Vertreter: Hofmann, Klaus

(56) Entgegenhaltungen:
- EP-A- 0 436 236
- US-A- 4 090 903
- US-A- 5 462 221
- US-A- 6 056 840
- US-A1- 2002 079 359

## Beschreibung

Die Erfindung betrifft ein Verfahren zur Herstellung eines stapelbaren Ladungsträgers aus thermoplastischem Kunststoff zur Aufbewahrung bzw. zum Ein- und Mehrwegetransport von Verpackungsgut aller Art, insbesondere von Kleinteilen.

Ladungsträger werden als Transport- und Lagerbehälter insbesondere dort eingesetzt, wo Werkzeuge oder Bauteile im Rahmen eines Herstellungsprozesses transportiert oder zwischengelagert werden müssen. Sie bestehen üblicherweise aus Metallblechen, Holz- oder Kunststoffplatten, die verklebt, verschweißt oder formschlüssig miteinander verbunden sein können. Dabei ist neben einer ausreichenden Tragkraft und Lebensdauer auch wichtig, dass die Behälter möglichst keine Vorsprünge oder Absätze aufweisen, die den Innenraum einengen oder anderweitig hinderlich sind. Teilweise sind im Innenraum auch zusätzliche Einsätze vorgesehen, die zwar den Innenraum vollständig und ohne Vorsprünge auskleiden, die jedoch selbst keine ausreichende Tragfähigkeit besitzen und zusätzlichen Aufwand bedeuten.

Ladungsträger aus Metall sind zwar relativ stabil, aber oft sehr schwer, korrosionsanfällig und lärmbelästigend beim Umgang. Die Verwendung von Kunststoffen hat den Vorteil, dass die Behälter ein relativ geringes Gewicht aufweisen. Andererseits hat die Verwendung von Kunststoffen den Nachteil, dass die Behälter oft nur eine geringe Stabilität besitzen.

Für vergleichbare Nutzungsaufgaben sind Spritzguss-Ladungsträger sowie aus PP-Hohlkammermaterial hergestellte Ladungsträger unterschiedlicher Bauart bekannt.

Bei den Spritzgusskisten handelt es sich um in aufwendigen Formen hergestellte Behälter. Diese werden auf Grund der hohen Werkzeugkosten nur in großen Stückzahlen hergestellt. Vergleichbare PP-Hohlkammerkisten zeichnen sich entweder dadurch aus, dass Sie aus vielen Einzelteilen zusammengefügt werden, die eine Vielzahl von Einzelarbeitsschritten erforderlich machen oder durch einfache Falt- und Biegekonstruktionen, die mittels eines umlaufenden Stapelprofils in Form gehalten werden. Dabei kommen thermische Abkantungen, Ultraschweißtechnik, Klebetechnik und andere Füge- und Bearbeitungsgänge zum tragen. Regelmäßig ergeben sich dabei Kanten, die nicht verschlossen sind. Dort kann bei Nassreinigung und Außenlagerung der Behälter Wasser eindringen und im Transport- und Lagerprozess zu ungewollter Feuchtigkeit bzw. Rostbildung an den zu transportierenden Teilen führen. Grundsätzlich zeichnen sich die Behälter dadurch aus, dass dank geringer Werkzeugkosten auch kleinste Stückzahlen unterschiedlichster Abmessungen hergestellt werden können.

Aus DE 295 17 978 U1 ist ein Ladungsträger bekannt, bei dem die Seitenwände Hohlkammerplatten aus thermoplastischem Kunststoff sind. Die oberen Kanten der Seitenwände sind mit einem Krempelrand versehen, der einstückig an die Seitenwände angeformt und durch eine starre Abkantung der Hohlkammerplatte gebildet wird. Dabei bildet sich ein umlaufender Hohlraum aus. Das untere Ende des Krempelrandes ist durch eine offene Fuge von den Seitenwänden getrennt. An den Seiten und Ecken werden die Seitenwände mittels Verbindungsstücken durch Kanten-, Falz- und Seitenverbinder formschlüssig zusammengehalten. Der beschriebene Ladungsträger hat einen komplizierten Aufbau mit vielen Vorsprüngen und Kanten und Absätzen. Seine Herstellung ist durch die vielen Einzelteile sehr aufwendig.

US-A-6 056 840 offenbart ein Verfahren zur Herstellung eines kastenförmigen Ladungsträgers aus thermoplastischem Kunststoff mit einem Boden und 4 Seitenwänden. Mittels mehrerer Heizschwerter erfolgt ein gleichzeitiges Anschmelzen entlang der zu verschweißenden Linien. Noch im plastischen Zustand werden die Seitenteile aneinandergeklappt und verschmelzen dauerhaft. Kurzfristige Einzelanfertigungen oder Kleinserien sind jedoch uneffektiv herzustellen, da für jede Ladungsträgergröße eine gesonderte Anordnung an Heizschwertern angefertigt werden muss.

In US-A-4 090 903 werden kastenförmige Ladungsträger mittels Schneidschwertern hergestellt, die auf einer Heizplatte fest aufgebracht sind und von dieser die Wärme zum Anschmelzen der Schneidlinien erhalten.

In EP-A-0 436 236 wird die Herstellung von kastenförmigen Ladungsträgern mit feststehenden Heizelementen beschrieben.

Aufgabe der Erfindung ist die Entwicklung eines Verfahrens zur einfachen und kostengünstigen Herstellung eines Kunststoffladungsträgers.

Diese Aufgabe wird erfindungsgemäß durch die Verfahrensmerkmale des Anspruches 1 gelöst. Ausgestaltende Merkmale sind im Unteranspruch 2 beschrieben.

Der Aufbau und die Herstellung des erfindungsgemäßen Ladungsträgers sind wie folgt:

Der Ladungsträger wird stets aus thermoplastischem Kunststoff hergestellt. Er besitzt einen Boden und 4 Seitenwände, die aus einer flächigen Ausgangsplatte hergestellt sind. Diese Ausgangsplatte ist vorzugsweise eine Hohlkammerplatte. Hohlkammerplatten haben eine glatte Oberfläche und durch ihre zwischenliegende Wabenstruktur ein geringes Gewicht bei einer hohen Steifigkeit. Dadurch können auch größere Ladungsträger mit einer hohen Traglast hergestellt werden. Für geringere Anforderungen kann die Ausgangsplatte auch aus thermoplastischem Vollmaterial bestehen.

Zwischen dem Boden und den Seitenwänden wird eine linienförmige Kerbung eingefügt, um die die Seitenwände zu einem kastenförmigen Grundkörper klappbar sind. Die aneinanderstoßenden vertikalen Kanten der Seitenwände sind gehrungsverschweißt. An den oberen Kanten der Seitenwände schließt optional ein Krempelrand an, der um eine linienförmige Kerbung in der Ausgangsplatte um 180° bis an die jeweilige Seitenwand geklappt ist.

Über dem Krempelrand wird ein Stapelprofil formschlüssig derart geclipst, dass ein am Stapelprofil angeformter Vorsprung das Stapelprofil auf dem Krempelrand fixiert. Das Stapelprofil ist vorzugsweise vollständig um den oberen Rand des Ladungsträgers umlaufend.

Eine weitere Möglichkeit besteht darin, dass auf den Ecken jeweils eine Stapelecke aufgesetzt ist, die ein dem Krempelrand ähnlich geformtes Verbindungsstück besitzt. Das Stapelprofil wird zwischen den Stapelecken über dem Krempelrand und über dem Verbindungsstück formschlüssig derart geclipst, dass ein am Stapelprofil angeformter Vorsprung das Stapelprofil auf dem Krempelrand und dem Verbindungsstück fixiert.

Üblicherweise besitzen dabei die Stapelecke und das Stapelprofil die gleiche umlaufende Form.

Zur zusätzlichen Stabilisierung sind an den vertikalen Kanten der Seitenwände Eckwinkel befestigt, die vollflächig verklebt oder verschweißt sind. Zur Aufnahme der Stapelkräfte reichen die Eckwinkel möglichst bis unter die Eckwinkel oder bis unter das Stapelprofil.

An den Seitenwänden ist mindestens ein Griff befestigt. Üblicherweise sind jeweils zwei Griffe an den gegenüberliegenden Seitenwänden angeordnet. Die Griffe selbst sind auf den Seitenwänden vollflächig verklebt, verschweißt oder in Aussparungen der Seitenwände eingesetzt bzw. eingeklipst.

Zur Aufnahme der Kräfte reichen die Griffe möglichst bis an den unteren Rand von Krempelrand oder Stapelprofil.

Die Stapelprofile und/oder die Stapelecken und/oder die Griffe sind vorzugsweise Spritzguss- oder Stranggussteile.

Hergestellt wird der kastenförmige Ladungsträger aus thermoplastischem Kunststoff aus einer flächigen Ausgangsplatte. Für den aus Boden und Seitenwänden herzustellenden Grundkörper wird zunächst eine Form vorbereitet, die dem zu fertigenden Grundkörper entspricht. Bei einem Rechteckigen Grundkörper wäre dies die Form eines "Schweizer Kreuzes".

Entlang einer vorgesehenen Kerbung wird mittels zwei V-förmiger Heizschwerter, die an parallel verfahrbaren Achsen befestigt sind, durch eine Plastifizierung des Kunststoffes eine Kerbe erzeugt. Gleichzeitig wird entlang der zu verschweißenden Kanten mittels der Heizschwerter durch Plastifizierung des Kunststoffes eine gehrungsähnliche Schräge erzeugt. Anschließend werden die Seitenwände um die Kerbung so schnell und so weit verformt, bis sich die noch plastifizierten Kanten der jeweils benachbarten Seitenteile sowie des Kodens und der entsprechenden Seitenteile berühren, miteinander verschmelzen und anschließend verfestigen.

Bei einer bevorzugten Form mit umlaufendem Krempelrand und aufgesetzten Stapelprofilen ist die Ausgangsplatte um einen Krempelrand erweitert. Vor Herstellung des Grundkörpers wird die flächige Ausgangsplatte entlang einer Umklapplinie für den Krempelrand mittels der Heizschwerter eine Kerbe eingeformt, die ein scharnierartiges Umklappen des Krempelrandes bis an die Seitenteile ermöglicht.

Nachfolgend werden ein Ladungsträger und seine Herstellung an einem Beispiel näher erläutert. Es zeigen:

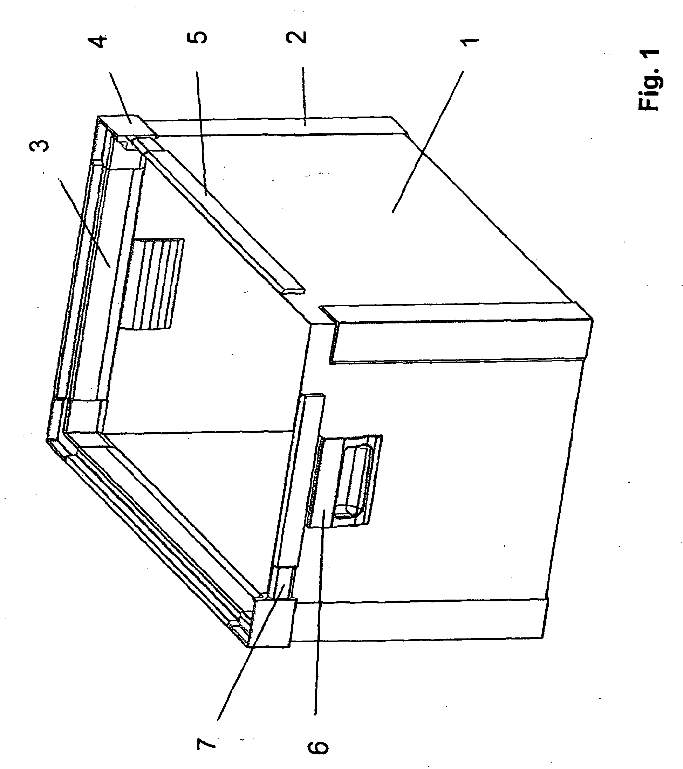

- Fig. 1: Ladungsträger

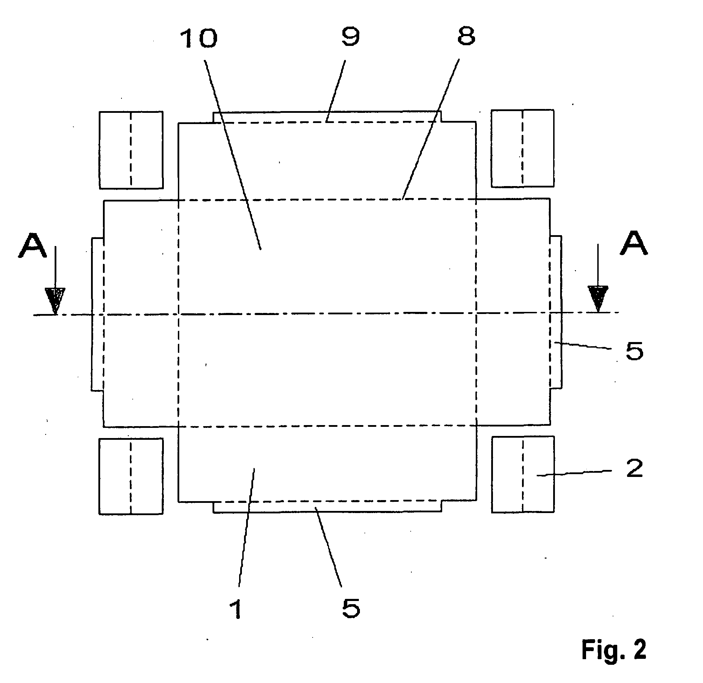

- Fig. 2: Ausgangsplatte

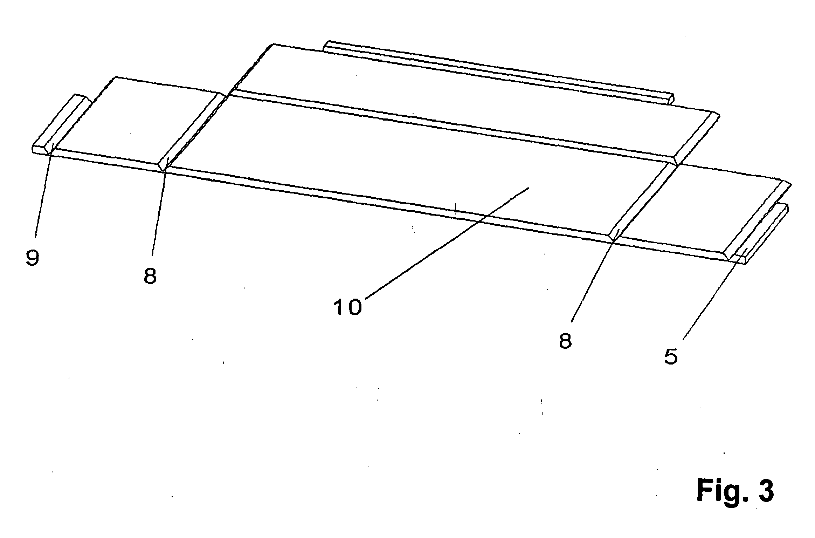

- Fig. 3: Ausgangsplatte Schnitt A-A

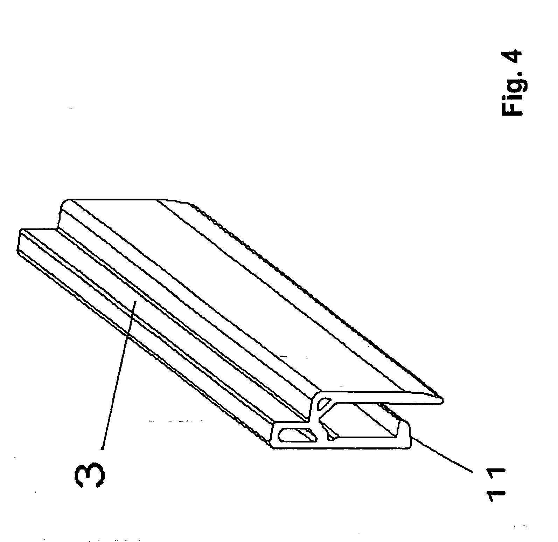

- Fig. 4: Stapelprofil

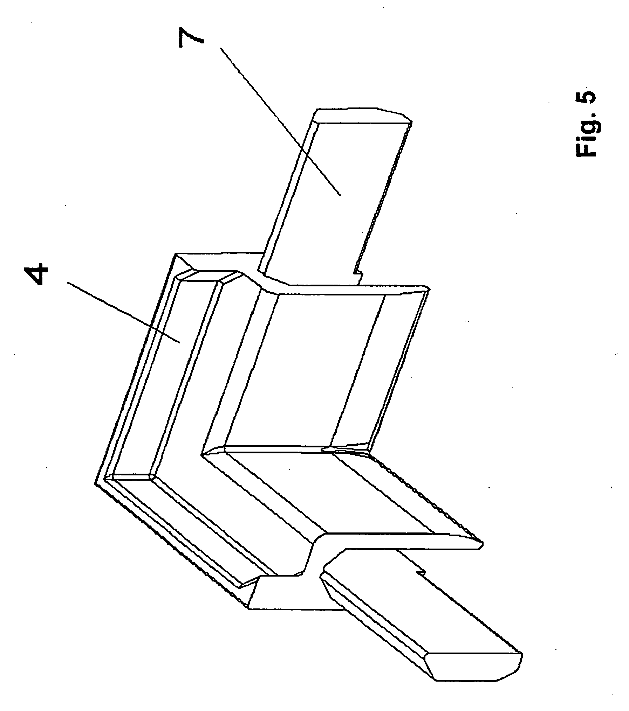

- Fig. 5: Stapelecke

Zur Lagerung und zum Transport von Kleinteilen für die Automobilproduktion sollen Kunststoffladungsträger einer Größe von 600 x 400 x 350 (L x B x H in mm) hergestellt werden.

Für den aus Boden 10 und vier Seitenwänden 1 herzustellenden Grundkörper wird zunächst eine rechteckige, 5 mm starke Kunststoff-Hohlkammerplatte in eine Form gebracht, die etwa einem "Schweizer Kreuz" entspricht. Dies kann durch Zuschneiden oder Stanzen geschehen. Der absolut parallele Verlauf aller Kanten ist von ausschlaggebender Bedeutung.

Die dabei abgetrennten Ecken werden weitergenutzt und entsprechend zu Eckwinkel 2 verarbeitet. Die seitlichen Kanten der Eckwinkel 2 werden dabei durch das Eindringen der V-förmigen Heizschwerter in Form einer Schräge geschlossen. Gleichzeitig werden die Teile parallel zu ihrer langen Seite mittig, mittels der Heizschwerter im 90° Winkel gekantet. Die kurzen Seiten werden stumpf vollflächig verschweißt und dabei auf Länge gebracht.

Das zugeschnittene "Schweizer Kreuz" wird auf einer Maschine mit zwei V-förmigen Heizschwertern, die an parallel verfahrbaren Achsen befestigt sind, bearbeitet. Dabei liegt der Zuschnitt auf einer sich um 90° drehenden Grundplatte. Es erfolgen zwei unterschiedliche Bearbeitungsgänge. Zunächst wird an allen Seiten parallel im Abstand von ca. 30 mm eine Kerbung 9 eingeformt. Die Schwerter dringen dabei von oben in die Platte ein, verschweißen V-förmig die getrennten Stirnflächen und lassen auf der Plattenunterseite ein dünnes Scharnierband stehen. Es werden immer gleichzeitig beide Heizschwerter eingesetzt. Nach dem Bearbeiten der ersten beiden Seiten dreht sich der zu bearbeitende Zuschnitt auf der drehbaren Grundplatte um exakt 90°. Es erfolgt der zweite Bearbeitungsschritt zur Erzeugung der im rechten Winkel gelegenen Kerbung 9.

Ohne ein weiteres Drehen des Werkstückes verfahren die beiden Heizschwerter exakt so weit zusammen, dass die Mitte der Schwertscheitellinien senkrecht über den zu bearbeitenden Kanten des "Schweizer Kreuzes" platziert sind. Analog der Scharnierbearbeitung tauchen die Schwerter von oben in das Werkstück ein und erzeugen eine gehrungsähnliche Schräge und Oberfläche. Noch im heißen, plastifizierten Zustand, wird das Werkstück gedreht und die entsprechenden Kanten im rechten Winkel analog bearbeitet. Auch diese Kanten werden zu Gehrungschrägen verformt. Noch im plastifizierten Zustand der vier Gehrungslinien werden die vier anhängenden Seiten an dem Basisrechteck im rechten Winkel nach oben geklappt. Die Gehrungsschrägen berühren sich im plastifizierten Zustand und verschmelzen miteinander. Es entsteht ein allseitig verschweißter Grundkasten.

Die an den Scharnierbändern anhängenden Krempelränder 5 werden um 180° nach außen und unten geklappt. Es entsteht ein nicht umlaufender Wulst an den Behälteroberkanten. Auf die Ecken werden als Spritzgusselemente vorgefertigte Stapelecken 4 mit einem angeformten Verbindungsstück 7 aufgesteckt. Die verbleibenden Strecken zwischen den Stapelecken 4 werden dabei ohne Wulst so ergänzt, dass entsprechend abgelängte Stapelprofile 3 über die Verbindungsstücke 7 der Stapelecken 4 und über den Krempelrand 5 eingesetzt werden. Ein am Stapelprofil 3 angeformter Vorsprung 11 ermöglicht ein aufklipsen auf dem Krempelrand. Dabei fixieren die Stapelprofile 3 die vier Stapelecken 4 des Ladungsträgers, ohne weitere Verbindungstechnik, wie Verschweißen oder Verkleben. Die Stapelprofile 3 sind im beschriebenen Beispiel Stranggussteile.

Die bearbeiteten Eckwinkel 2 werden auf ihren Innenseiten durch Hitze plastifiziert und auf die ebenso erhitzten äußeren Eckflächen des Ladungsträgers aufgedrückt. Es kommt hier zur vollflächigen Verschweißung der aufgesetzten Eckwinkel 2 mit dem Hohlkammerplatten-Grundkörper. Dabei wird eine enorme Verwindungssteifigkeit und Stapelbelastbarkeit erzeugt.

### Bezugszeichenaufstellung

- 1: Seitenwand
- 2: Eckwinkel
- 3: Stapelprofil
- 4: Stapelecke
- 5: Krempelrand
- 6: Griff
- 7: Verbindungsstück
- 8: Kerbung
- 9: Kerbung
- 10: Boden
- 11: Vorsprung

## Patentansprüche

1. Verfahren zur Herstellung eines kastenförmigen Ladungsträgers aus thermoplastischem Kunststoff mit einem Boden (10) und 4 Seitenwänden (1) mit folgenden Merkmalen:
- auf einer flächigen Ausgangsplatte in der vorbereiteten Form des zu fertigenden Ladungsträgers wird entlang einer vorgesehenen Kerbung mittels zwei V-förmiger Heizschwerter, die an parallel verfahrbaren Achsen befestigt sind, durch eine Plastifizierung des Kunststoffes eine Kerbe (8) erzeugt,
- gleichzeitig wird entlang der zu verschweißenden Kanten mittels der Heizschwerter durch Plastifizierung des Kunststoffes eine gehrungsähnliche Schräge erzeugt,
- danach erfolgt eine Drehung des Werkstückes um 90° und eine Verstellung des Abstandes der Heizschwerter auf die Länge oder Breite der um 90° versetzten Kerbung,
- danach wird wieder durch Plastifizierung des Kunststoffes eine Kerbe (8) und eine gehrungsähnliche Schräge erzeugt,
- anschließend werden die Seitenwände (1) um die Kerbung (8) so schnell und so weit verformt, bis sich die noch plastifizierten Kanten der jeweils benachbarten Seitenwände (1) sowie die horizontalen Gehrungskanten des Bodens (10) und der entsprechenden Seitenwände (1) berühren, miteinander verschmelzen und anschließend verfestigen.

2. Verfahren nach Anspruch 1, **dadurch gekennzeichnet, dass** von einer um einen Krempelrand (5) erweiterten flächigen Ausgangsplatte ausgegangen wird, durch parallele Verstellung der Heizschwerter eine Kerbung (9) für den Krempelrand (5) erzeugt wird und nach einer Drehung des Werkstückes um 90° die beiden Kerbungen (9) und (8) wieder nacheinander erzeugt werden und anschließend die Krempelränder (5) um 180° nach außen umgeklappt werden.

## Claims

1. Process for making from thermoplastic material a box-shaped load carrier comprising a base (10) and 4 side walls (1), which process has the following features:
- on a planar parent sheet in the prepared shape of the load carrier to be produced, along a provided notching groove, a notch (8) is produced by means of two V-shaped heating swords attached to parallel-movable shafts, by plasticization of the material,
- at the same time, along the edges to be heat-sealed, a mitre-like bevel is produced by means of the heating swords by plasticization of the material,
- after this, the workpiece is rotated about 90° and the distance apart of the heating swords is adjusted to the length or width of the 90°-offset notching groove,
- after this, a notch (8) and a mitre-like bevel are produced, again by plasticization of the material,
- then the side walls (1) are deformed about the notching groove (8) with such speed and to such an extent that the still plasticized edges of the respectively adjacent side walls (1), and the horizontal mitred edges of the base (10) and of the corresponding side walls (1), touch, fuse together and then solidify.

2. Process according to Claim 1, **characterized in that**, starting from a planar parent sheet widened by a turn-up margin (5), a notching groove (9) for the turn-up margin (5) is produced by parallel adjustment of the heating swords and, following a rotation of the workpiece about 90°, the two notching grooves (9) and (8) are again successively produced and then the turn-up margins (5) are folded over outwards about 180°.

## Revendications

1. Procédé en vue de la fabrication d'un porteur de charge en forme de caisson en matière synthétique thermoplastique avec un fond (10) et 4 parois latérales (1) avec les caractéristiques suivantes:
- sur une plaque de départ plate dans la forme apprêtée du porteur de charge à fabriquer, on produit, le long d'un entaillage prévu, à l'aide de deux ailerons de chauffage en forme de V, qui sont fixés à des axes déplaçables d'une manière parallèle, une entaille (8) par une plastification de la matière plastique,
- on produit simultanément, le long des arêtes à souder, à l'aide des ailerons de chauffage, par plastification de la matière synthétique, un chanfrein similaire à un onglet,
- on procède ensuite à une rotation de la pièce de 90° et à un décalage de l'écart des ailerons de chauffage sur la longueur ou sur la largeur de l'entaillage décalée de 90°,
- on produit ensuite, à nouveau par plastification de la matière synthétique, une entaille (8) et un chanfrein similaire à un onglet,
- on déforme ensuite les parois latérales (1) autour de l'entaillage (8) si rapidement et si largement que les arêtes encore ramollies des parois latérales à chaque fois voisines (1) ainsi que les arêtes d'onglet horizontales du fond (10) et des parois latérales correspondantes (1) entrent en contact, se fusionnent les unes aux autres et se solidifient par la suite.

2. Procédé selon la revendication 1, **caractérisé en ce que** l'on part d'une plaque de départ plate élargie d'un rebord de carde (5), **en ce que** l'on produit par le décalage parallèle des ailerons de chauffage, un entaillage (9) pour le rebord de carde (5) et **en ce que** l'on produit, après une rotation de la pièce de 90°, à nouveau, l'un après l'autre, les deux entaillages (9) et (8) et **en ce que** l'on bascule ensuite vers l'extérieur de 180° les rebords de carde (5).
